# EUROPÄISCHE PATENTSCHRIFT

(11) **EP 0 485 784 B1**
(45) Veröffentlichungstag und Bekanntmachung des Hinweises auf die Patenterteilung: **23.08.1995**
(21) Anmeldenummer: 91118220.2
(22) Anmeldetag: 25.10.1991
(51) Int. Cl.: H02J 7/00

(54) **Ladeeinrichtung für wiederaufladbare Batterien**
Charging device for rechargeable battery
Chargeur pour batteries rechargeables

(30) Priorität: 15.11.1990 DE 4036373
(43) Veröffentlichungstag der Anmeldung: 20.05.1992
(73) Patentinhaber: Kress-elektrik GmbH + Co. Elektromotorenfabrik, D-72406 Bisingen (DE)
(72) Erfinder: Binder, Alfred, W-7457 Bisingen (DE); Poppel, Rolf, W-7450 Hechingen (DE)
(74) Vertreter: Otte, Peter, Dipl.-Ing.

(56) Entgegenhaltungen:
- EP-A- 0 332 475
- EP-A- 0 343 055
- DE-A- 2 702 129
- DE-U- 8 710 574
- DE-U- 8 713 538
- US-A- 3 691 283
- US-A- 4 558 270
- US-A- 4 727 306

## Beschreibung

### Stand der Technik

Die Erfindung geht aus von einer Ladeeinrichtung nach dem Oberbegriff des Anspruchs 1. Bei einer bekannten Ladeeinerichtung dieser Art (US-A-3 696 283) lassen sich an ein im wesentlichen einen Transformator enthaltendes Grundgerät seitlich Lademodule anstecken, die jeweils Ladeschachtaufnahmen für unterschiedliche Batterien aufweisen. Durch das seitliche Einstecken ergibt sich sowohl die mechanische Verbindung zum Grundgerät und zu den einzelnen Lademodulen untereinander als auch der elektrische Anschluß, der so getroffen ist, daß die einzelnen Lademodule jeweils zueinander parallele Abzweigungen bilden, die eine Gleichrichterdiode und einen Vorwiderstand umfassen, um so grob eine Anpassung an die jeweils zu ladende Batterie herstellen zu können. Das Grundgerät liefert dabei an den Sekundäranschlüssen seines Transformators eine möglichst konstante Ausgangsspannung, wobei auch eine Spannungskonstanthalteschaltung vorgesehen sein kann.

Vergleichbar mit dieser bekannten Ladeeinrichtung ist der automatische Lader entsprechend der EP-A-0 343 055, bei dem sich ebenfalls Lademodule in jedem Erweiterungsmodul befinden. Die Befestigung erfolgt hier auf Hutschienen; die mechanische Verriegelung über einen drehbaren Schlüssel.

Während die US-A-4 727 306 den Aufbau einer elektrischen Ladeschaltung einschließlich Temperaturüberwachung und Abschaltung bei Beendigung des Ladevorgangs zeigt, läßt sich dem Gebrauchsmuster DE-U-8 713 538 eine Vorrichtung zum Aufladen von elektrischen Akkumulatoren als bekannt entnehmen, bei welchem ein sich über die gesamte Länge der Ladeeinrichtung erstreckendes kastenförmiges Gehäuse vorgesehen ist, auf dessen Oberseite außen nebeneinander ausgebildete Stellplätze für eine Anzahl von Fassungen vorgesehen sind, die Aufnahmegehäuse von Akkumulatoren bilden. Die Fassungen werden mit den Stellplätzen durch Einschieben in schwalbenschwanzförmige Halterungen verbunden.

Erkennbar sind daher Ladeeinrichtungen für wiederaufladbare Batterien oder Akkumulatoren in vielfältiger Form bekannt. Solche Ladeeinrichtungen dienen zur wiederholten Aufladung von entsprechend geeigneten Akkus und umfassen ein breites Gerätespektrum, um beispielsweise so unterschiedliche Akkus wie schwere Fahrzeugbatterien bis hinunter zu kleinsten Knopfzellen wieder aufladen zu können.

Insbesondere in letzter Zeit werden Ladegeräte für Akkus in größerem Umfang eingesetzt, weil immer mehr batteriebetriebene Geräte Verwendung finden, nicht nur im häuslichen Bereich (wiederaufladbare Zahnbürsten, Taschenlampen u.dgl.), sonderen auch im handwerklichen und industriellen Maßstab speziell auch für Elektrohandwerkzeuge, die ohne Netzanschluß zur Stromversorgung über einen Akkupack oder eine sonstige Ausrüstung verfügen, die sie netzunabhängig macht.

Solche Akkupacks, aber auch die heute schon vielfach im Gebrauch befindlichen Nickelkadmium-Akkus, die in den gängigen Batteriegrößen erhältlich sind, und die unter Umständen 1.000 oder mehr Ladezyklen überstehen können, sind nicht nur aus Umweltgründen gegenüber Batterien zu bevorzugen, sondern auch deshalb, weil sie inzwischen, etwa für den Motorantrieb, hohe Ströme über längere Zeiträume abgeben können.

Bisher ist es so, daß praktisch jedes im Haushalt, im Handwerk oder in der Industrie verwendete, seine Stromversorgung aus Akkumulatoren beziehende Gerät über ein eigenes, insofern dann auch speziell abgestimmtes Ladegerät verfügt, das nicht selten so ausgelegt ist, daß man stundenlange Wartezeiten in Kauf nehmen muß, um das jeweils zugeordnete Gerät wieder einsatzfähig zu machen.

Solche Ladegeräte verfügen üblicherweise über die gesamte, für ein einwandfreies Laden des oder der jeweils zugeordneten Akkus erforderliche Ausrüstung, also Transformatoren, Gleichrichterschaltungen, Steuersysteme, Temperatursensor zur Vermeidung einer Überhitzung des Akkus während des Ladevorgangs u.dgl. und sind nicht geeigent, auch für Akkupacks oder wiederaufladbare Batterien anderer Form, anderer Kapazität und dann üblicherweise auch anderen Anschlüssen eingesetzt zu werden. Dies führt nicht nur zu Umständlichkeiten beim Gebrauch der verschiedenen, von Akkus angetriebenen Geräten, sondern auch zu unnötigen Investitionen und einer umfassenden Lagerhaltung.

Wie eingangs erwähnt, Mehrfach-Ladegeräte bekannt, wobei dann bei entsprechendem Aufbau jedes einzelne Erweiterungsmodul eine eigene Lademimik enthält.

Andere Mehrfach-Ladegeräte, bei denen gleichzeitig mehrere, etwa durch Federspannung auch verstellbare Positioniermöglichkeiten für wiederaufladbare Batterien vorgesehen sind, sind nicht angepaßte Ladegeräte, die nur einen bestimmten vorgegebenen Ladestrom erzeugen können und auf den Zustand der Batterie keine Rücksicht nehmen, beispielsweise auch deren Temperatur nicht erfassen können.

Der Erfindung liegt die Aufgabe zugrunde, ein einheitliches, universell anwendbares Akkuladesystem in modularer Ausführung zu schaffen, mit dem sich wiederaufladbare Batterien beliebiger Form, Spannung und Kapazität, falls gewünscht auch in kürzester Zeit, wieder laden lassen.

### Vorteile der Erfindung

Die Erfindung löst diese Aufgabe mit den Merkmalen des Hauptanspruchs und hat den Vorteil, daß es nunmehr möglich ist, unter Verwendung eines Grundgeräts eine Vielzahl gleicher oder unterschiedlicher Akkus laden zu können, so daß ein Benutzer, der beispielsweise ein von Akkumulatoren versorgtes Arbeitsgerät in Verbindung mit einem Akkuladesystem nach vorliegender Erfindung erwirbt, dann speziell dieses Akkuladesystem in beliebiger Weise erweitern kann, und zwar durch jeweils dem gleichen oder anderen Akkus, insbesondere entsprechenden Fremdfabrikaten, angepaßten weiteren Zusätzen oder Erweiterungsmodulen, die mit dem Grundmodul des Akkuladesystems verbunden werden.

Der Grundmodul enthält dabei als Grundgerät sämtliche für den eigentlichen elektrischen Ladevorgang erforderlichen Anordnungen und Schaltungen nur einmal, also Transformator, Gleichrichter, Steuerschaltung einschließlich auf Temperatursignale reagierender Bereich, so daß sich schon aus diesem Gesichtspunkt ein erheblicher Preisvorteil für den Benutzer ergibt, da man mit einem einzigen Grundmodul die gesamte Palette der vielfältigen Akkus und wiederaufladbaren Batterien versorgen kann.

Es versteht sich, daß das Grundmodul als Grundgerät dann eine entsprechend leistungsfähige Elektronik enthält, die zum Steuern, Regeln und Überwachen des jeweiligen Ladevorgangs benötigt wird. Das jeweilige Zusatz-Adapterteil oder Erweiterungsmodul, welches mit dem Grundmodul zu verbinden ist, ist dann wenig mehr als ein der entsprechenden, aufzunehmenden Form des wiederaufladbaren Akkus angepaßtes Formteil und enthält nur Kontakte, um einerseits den vom Grundmodul stammenden Ladestrom zum entsprechenden Akku weiterzuleiten und andererseits, falls gewünscht und erforderlich, entsprechende Aussagen über dessen jeweilige Temperatur zu machen.

Zusatzadapterteile oder Erweiterungsmodule, wie sie im folgenden genannt werden, werden seitlich an das Grundgerät angedockt und sind in beliebigen Ausführungsformen vorgesehen, und zwar bezüglich des Aufnahmegeräts für den jeweils einzusetzenden und dann zu ladenden Akku, während die äußere Form der einzelnen Erweiterungsmodule untereinander identisch sein kann, so daß sich ein insgesamt gefälliges Aussehen des gesamten Akkuladesystems ergibt.

Dabei weist auch das Grundgerät einen Aufnahmeschacht für einen zu ladenden Akku oder einen Akkupack auf und enthält ferner Trafo, Gleichrichter und Elektronik, wobei die für die verschiedenen zu ladenden Akkutypen vorgesehenen Erweiterungsmodule seitlich an das Grundgerät angesetzt werden, wodurch gleichzeitig die elektrische Kontaktverbindung des jeweiligen Erweiterungsmoduls zum Grundgerät hergestellt wird.

Es ist auch möglich, mehrere Erweiterungsmodule hintereinander an das Grundgerät anzureihen, je nach Ausgestaltung der elektrischen Steuerschaltung, so daß zwei oder mehr Akkus in den Ladeschächten angeordnet sind, die dann sinnvollerweise nacheinander geladen werden. So kann man in das Akkuladesystem mit einem oder mehreren, an das Grundgerät angeschlossenen Zusatzadapterteilen bzw. Erweiterungsmodulen mindestens zwei Akkus zur gleichen Zeit einsetzen, beispielsweise am Abend, die dann innerhalb einer vorgegebenen Zeit aufeinanderfolgend geladen werden, so daß beide z.B. morgens entnommen werden können.

Dabei ist von Vorteil, daß die Steuerelektronik so ausgebildet ist, daß sie von selbst auf jeweilige elektrische Daten des zu ladenden Akkus reagiert; beispielsweise kann durch einen anfänglichen Stromimpuls zum zu ladenden Akku vom Steuergerät selbst automatisch sensiert werden, über welche Kapazität und insbesondere über welche Nennspannung der Akku verfügt, so daß vom Grundgerät dann die entsprechenden Ladeströme bereitgestellt werden können.

Unter Benutzung der modernen Technologien bei der Daten- und Versorgungsspannungsübertragung lediglich über Zweidrahtleitungen ist es auch möglich, von der Steuerschaltung des Grundgeräts aus die verschiedenen Einsätze jeweils anzusprechen und in zeitlicher Abfolge in angeschlossenen Erweiterungsmodulen sitzende Akkus zu laden oder dann, wenn es sich um gleichartige Akkus handelt, durch entsprechende Stromerhöhung auch gleichzeitig parallel den Ladevorgang für die über Erweiterungsmodule noch zusätzlich angeschlossenen Akkus durchzuführen.

Schließlich ist es auch möglich, in konventioneller Technik jedes anzuschließende Erweiterungsmodul über eigene elektrische Verbindungsleitungen mit der Steuerschaltung im Grundgerät zu verbinden, wozu bei seitlicher Aneinanderreihung auf der Zusatz-Adapterteilseite diese Verbindungsleitungen dann in zwischengeschalteten Adapterteilen oder Erweiterungsmodulen lediglich durchgeschleift zu werden brauchen. Es versteht sich natürlich, daß hier auch die Möglichkeit eingeschlossen ist, zunächst auf beiden Seiten des Grundgerätes jeweils ein Erweiterungsmodul anzuordnen.

Durch die in den Unteransprüchen aufgeführten Maßnahmen sind vorteilhafte Weiterbildungen und Verbesserungen der Erfindung möglich. Dabei können die Steckverbindungen zwischen den verschiedenen Erweiterungsmodulen und dem Grundgerät einerseits bzw. untereinander andererseits über Steckkontakte erfolgen, die in entsprechende komplementäre Steckbuchsen eingeführt werden; es sind dann zusätzlich mechanische Schnapp- oder Rastverbindungen vorhanden, die ein Verhaken von Grundgerät mit den Erweiterungsmodulen ermöglichen, beispielsweise indem das jeweilige Erweiterungsmodul mit einem seitlichen nach unten vorspringenden Steckkontaktvorsprung zunächst von oben in eine entsprechende Steckbuchsenöffnung am Grundgerät eingeführt wird, bis beide Teilgehäuse bündig aneinanderliegen. Ein seitliches Auseinanderziehen ist dann nicht mehr möglich.

Eine ähnliche Lösung ergibt sich, wenn zwischen den beiden Teilgehäusen des Grundgeräts und des Erweiterungsmoduls die mechanische Verbindung mit Hilfe einer Führungsnut bei gleichzeitig seitlich angeordneten Kontakten zwischen Grundgerät und Erweiterungsmodul vorgenommen wird. In diesem Fall wird durch das seitliche mechanische Einstecken oder Aufstecken des Grundgeräts auf das Erweiterungsmodul bzw. umgekehrt zwischen den beiden aneinandergrenzenden Wandbereichen durch sich jeweils überlappende und hintergreifende Führungsnuten eine feste mechanische Sicherung erreicht, wobei dann gleichzeitig die Verbindungskontaktierungen für die weiterführenden elektrischen Leitungen vom Erweiterungsmodul hergestellt werden. Die aneinandergrenzenden elektrischen Kontakte reinigen sich durch das zunächst seitliche Vorbeischieben selbst und können auch, beispielsweise auf einer Seite unter die Kontaktgabe verbessernder Federvorspannung stehen.

### Zeichnung

Ausführungsbeispiele der Erfindung sind in der Zeichnung dargestellt und werden in der nachfolgenden Beschreibung näher erläutert. Es zeigen:
- Fig. 1: schematisiert in perspektivischer Ansicht ein mit einem eigenen Ladeschacht versehenes Grundgerät, an welches weitere Erweiterungsmodule mit unterschiedlichen Ladeschachtöffnungen für unterschiedliche Akkus angesetzt werden können und
- Fig. 2: eine Variante der in Fig. 1 dargestellten Grundform, bei der neben dem seitlichen Andocken eine weitere Möglichkeit zur Adaption an unterschiedliche Akkus und Akkusysteme gezeigt ist, nämlich die Ausbildung unterschiedlicher Ladeschacht-Einsätze (Wechseleinsätze), lediglich für das Grundgerät und/oder auch bei den verschiedenen Erweiterungsmodulen;
- Fig. 3: eine weitere Ausführungsform zur seitlichen Anordnung eines oder mehrerer Erweiterungsmodule an einem pultförmigen Grundgerät, wobei auch die Erweiterungsmodule das gleiche gefällige Aussehen aufweisen und durch die nach vorn gerichtete Neigung zum Benutzer das Einsetzen der Akkus gegen die Ladeschächte erleichtert wird, wobei die
- Fig. 3a und 3b: jeweils Detailschnittdarstellungen längs den Linien IIIa-IIIa bzw. IIIb-IIIb der Fig. 3 sind.

### Beschreibung der Ausführungsbeispiele

Der Grundgedanke vorliegender Erfindung besteht darin, ein umfassendes Akkuladesystem mit einem Grundmodul und einer beliebigen Vielzahl von Erweiterungsmodulen zu schaffen, die in mehreren Ausführungen an das den elektrischen Bereich abdeckende Grundgerät angedockt werden können, und zwar durch seitliche Anlage, wodurch sofort auch die erforderlichen elektrischen Anschlüsse zwischen dem Grundgerät einerseits und der Mehrzahl am Grundgerät bzw. auch untereinander angedockter Erweiterungsmodule hergestellt wird.

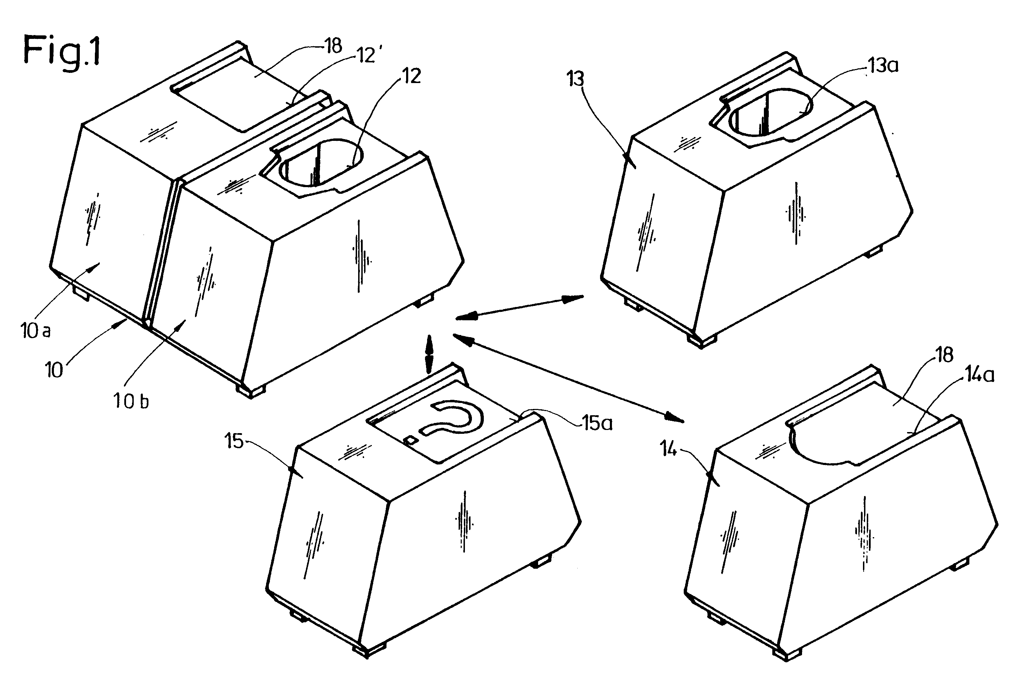

In Fig. 1 ist ein Grundgerät 10 mit einem ersten seitlich angedockten Erweiterungsmodul 11 dargestellt, welches einheitlich aus den beiden einzelnen Elementen 10a und 10b besteht, die ein zusammengehöriges Gehäuse bilden, das im in der Zeichenebene linken Teil die Elektronik und dazugehörige Komponenten aufnimmt und im rechten Teil eine Ladeschachtöffnung 12 aufweist, beispielsweise für den eigenen Geräteakku, also für den Akku, der mit einem Gerät verkauft wird bzw. zu einem Gerät gehört, zu dem auch das erfindungsgemäße Akkuladesystem mitgeliefert werden kann. Selbstverständlich ist auch ein unabhängiger Erwerb möglich.

Die Darstellung dieses erweiterten Grundgeräts umfaßt auch die Möglichkeit, dann, wenn der Elektronikbereich mit Steuerschaltung, Transformator u. dgl. hinreichend klein baut, auch im rechten Teil des insofern doppelgehäusigen Grundgeräts 10 einen weiteren Ladeschacht 12′ anzuordnen, so daß sich hier sofort zwei Lademöglichkeiten für gleiche oder unterschiedliche Akkus ergeben.

Die weiteren Ausgestaltungen der Erfindung können dann so sein, daß an das erweiterte Grundgerät 10 mit erstem Ladeschacht 12 und gegebenenfalls weiterem Ladeschacht 12′ Erweiterungsmodule 13, 14, 15 seitlich angedockt werden, so daß sich weitere, Akkus zum Laden aufnehmende Ladeschächte in Verbindung mit den noch angedockten Erweiterungsmodulen 13, 14, 15 ergeben; Ferner umfaßt die Darstellung der Fig. 1 unter den verschiedenen Andockmöglichkeiten noch ein serienweises Ansetzen sämtlicher Erweiterungsmodule 13, 14, 15 an das Grundgerät 10, wobei es sich versteht, daß in diesem Fall jedenfalls die insofern mittleren Erweiterungsmodule auf beiden Seiten Kontaktmöglichkeiten aufweisen.

Es ist ferner möglich, am Grundgerät auf beiden Seiten Erweiterungsmodule anzudocken, wobei Kontakte entweder vom Grundgerät und/oder von den Erweiterungsmodulen ausgehen können.

Da es problemlos möglich ist, die nur einmal vorhandene Elektronik mit Transformator und Gleichrichter so auszulegen, daß von der Elektronik die elektrischen Daten des jeweils zu ladenden Akkus (Nennspannung, Kapazität) erfaßt und der Ladevorgang entsprechend abgestimmt wird, ist es eine vorteilhafte Ausgestaltung vorliegender Erfindung, gerade die Erweiterungsmodule 13, 14, 15 in den verschiedensten Ausführungsformen mit Bezug auf ihre jeweiligen Ladeschächte und die in diesen zur Kontaktierung der jeweiligen Akkuanschlüsse angeordneten inneren Kontakte zur Verfügung zu stellen, so daß jede Art von Akkumulator oder wiederaufladbare Batterie geladen werden kann, insbesondere auch Fremdfabrikat-Akkus. Hierdurch ergeben sich nicht nur entscheidende Preisvorteile dann, wenn man, was ohnehin kaum zu vermeiden ist, mit einer Vielzahl von unterschiedlichen Akkupacks bzw. wiederaufladbaren Batterien arbeitet, sondern es reduziert sich auch der Raumbedarf, da man nur einen einzigen Elektronikbaustein für die Steuerung, Regelung und die Überwachung des Ladevorgangs benötigt, der sich dann jeweils im Grundgerät 10 befindet.

In den Erweiterungsmodulen 11, 13, 14, 15 ist bis auf die vorhandenen Kontakte und gegebenenfalls durchgeschleiften Anschlußleitungen keine Elektronik vorhanden.

Vorhandene Kontakte können auch einen Temperatursensor-Kontakt umfassen, der jedenfalls bei bestimmten, anspruchsvolleren Ladegeräten stets vorhanden ist, um auch den Temperaturzustand des jeweils zu ladenden Akkumulators zu erfassen. Üblicherweise weisen viele Akkupacks daher auch von Anfang an schon drei Kontaktanschlüsse auf, wovon einer zu einem Temperatursensor innerhalb des Akkupacks führen.

Alternativ ist es auch möglich, den jeweiligen Ladeschacht 12, 12′, 13a, 14a, 15a so auszubilden, daß bei keinen Temperatursensor aufweisenden Akkus die Temperatur des eingesetzten Akkus über einen ladeschachteigenen Temperatursensor erfaßt wird.

Sollen gleichzeitig mehr als nur ein Akku geladen werden, dann ist dies dann problemlos möglich, wenn die beiden oder mehreren Akkus über die gleichen Daten verfügen, wozu die elektronische Steuerschaltung des Grundgeräts dann lediglich den Ladestrom erhöht; handelt es sich um Akkumulatoren unterschiedlicher Daten und/oder Fabrikate, dann wird eine zeitlich aufeinanderfolgende Ladung bei gleichzeitig eingesetzten Akkumulatoren in Betracht gezogen, wozu die Steuerelektronik die angeschlossenen Zusatz-Adapterteile zeitlich aufeinanderfolgend bedient und das Adapterteil, welches einen dann schon geladenen Akku enthält, von der weiteren Stromzufuhr abschaltet. Dies kann über gesonderte Steuerinformationen geschehen, die ebenfalls über die Zweidraht-Verbindungsleitung für den Ladestrom oder auch über die Temperatursensorleitung erfolgen kann - im jeweiligen Zusatz-Adapterteil befindet sich dann noch, den Akkuanschlußkontakten zugeordnet ein durch diese jeweilige Steuerinformation ansprechbares Schaltteil, oder es werden zu den jeweiligen angedockten Zusatz-Adapterteilen separate elektrische Verbindungsleitungen vorgesehen - wozu dann bei einer Vielzahl gleichzeitig angeschlossener Zusatz-Adapterteile Durchschleifungen der Anschlußkontakte problemlos möglich sind -, und die Elektronik des Grundgeräts beaufschlagt dann die einzelnen Zusatz-Adapterteile durch Umschaltung aufeinanderfolgend. Da eine gemeinsame Masseleitung verwendet werden kann, bleibt auch bei einer solchen Ausgestaltung die Anzahl der Leitungsverbindungen gering.

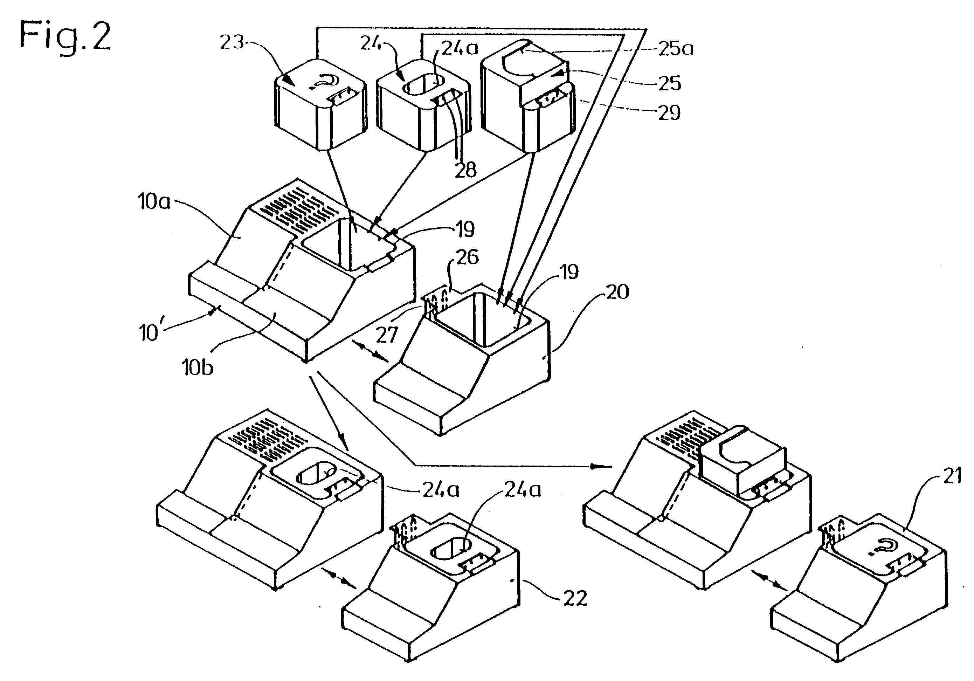

Die in Fig. 2 dargestellte Variante vorliegender Erfindung verdeutlicht zunächst deren universelle Anwendbarkeit und Ausführbarkeit; ein Grundgerät 10′ umfaßt auf der in der Zeichnung linken Seite das Gehäuseteil 10a, der Trafo, Gleichrichter und elektronischen Schaltungsteil beherbergt,sowie auf der rechten Seite das Gehäuseteil 10b mit Ladeschachtöffnung 19. Es sind jeweils seitlich andockbare Erweiterungsmodule 20, 21, 22 ... vorgesehen, die über eigene Ladeschächte ohne eigene Elektronik verfügen und die durch Steckverbindungen mit dem Grundgerät 10′ verbindbar sind.

Zusätzlich können vorgesehene Aufnahmeschächte 19, wenn sie nicht von vornherein eine spezielle, einem gegebenen Akkumulator oder einer wiederaufladbaren Batterie angepaßte Innenkontur aufweisen, in einer Ausgestaltung vorliegender Erfindung mit jeweils einem aus einer Vielzahl vorhandener Ladeschacht-Adaptereinsätze versehen werden, die in Fig. 2 mit 23, 24, 25 bezeichnet sind. Durch die Ladeschacht-Adaptereinsätze relativiert sich das Problem, eine Vielzahl unterschiedlicher oder gleicher Akkumulatoren zu laden, insofern weiter, als die einzelnen Ladeschacht-Adaptereinsätze mit entsprechenden Abmessungen in dann mit ihren jeweils zugeordneten Innen- bzw. Außenmaßen aufeinander abgestimmte, stets gleiche Aufnahmeschächte eingesetzt werden können, so daß man nur einige wenige zusätzliche Erweiterungsmodule dann benötigt, wenn man über eine entsprechende Anzahl von LadeschachtAdaptereinsätzen verfügt.

Die Steckverbindungen der zusätzlichen Erweiterungsmodule mit dem Grundteil 10′ sind bei dem Ausführungsbeispiel der Fig. 2 so getroffen, daß an jedem zusätzlichen Erweiterungsmodul ein vorspringender Steckkontaktrand 26 gebildet ist, an welchem nach unten weggehende Kontaktstifte 27 angeordnet sind, die in entsprechende, nach oben offene Steckbuchsen 28 am Grundgerät 10′ eingreifen; arbeitet man in diesem Zusammenhang noch mit verschiedenen Ladeschacht-Adaptereinsätzen, dann können die Steck-buchsen 28, für alle Ausführungsbeispiele "genormt", auch an einer seitlichen Steckbuchsenfläche 29 der Ladeschacht-Adaptereinsätze angeordnet sein.

Die einzelnen Ladeschacht-Adaptereinsätze verfügen dann ihrerseits wieder über einen oder mehrere eigentliche Ladeschächte 24a, 25a. Auch bei diesem Ausführungsbeispiel enthalten die Erweiterungsmodule bzw. die Ladeschacht-Adaptereinsätze lediglich Kontaktanschlüsse, mit einer Kontakt-Zwischenlösung, indem über die verschiedenen Kontaktanschlüsse die elektrische Verbindung zunächst vom Grundgerät zu einem jeweiligen Erweiterungsmodul und von diesem über ebenfalls entsprechend "genormte" Kontaktanschlüsse zum jeweiligen Ladeschacht-Adaptereinsatz geführt werden.

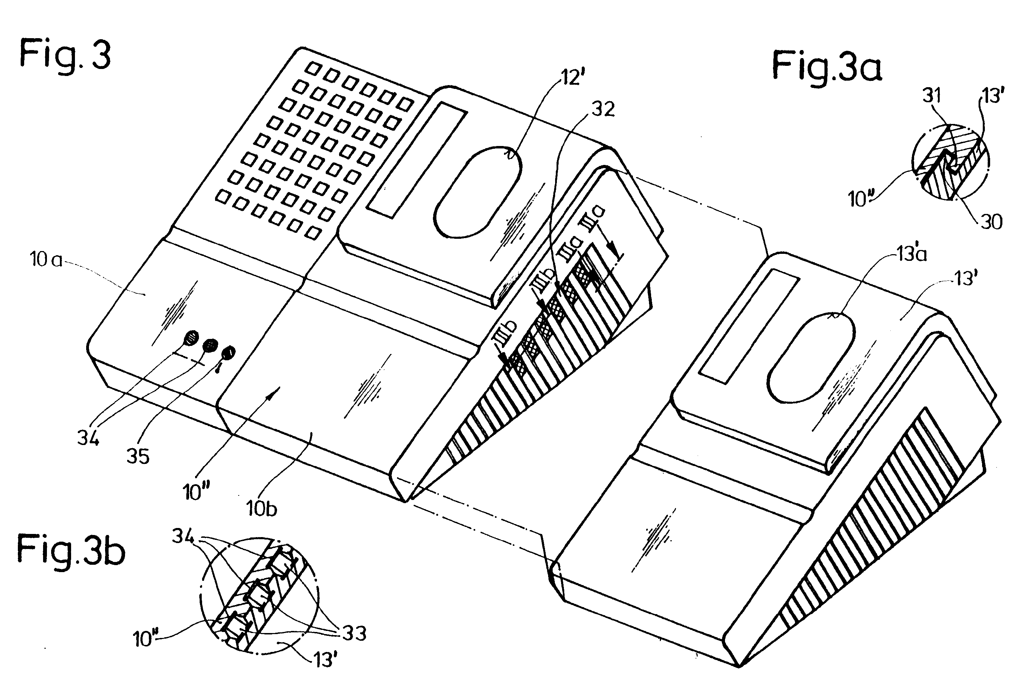

Die Ausführungsform der Fig. 3 läßt erkennen, daß zusätzlich zu den vertikal ineinander steckbaren Kontaktmöglichkeiten entsprechend Fig. 2 oder auch allein bei dann anderen Kontaktierungsvarianten das jeweilige Erweiterungsmodul auch so mechanisch am Grundmodul oder Grundgerät befestigt werden kann, daß Führungsnuten an beiden aufeinander ausgerichteten Wandteilen von Grundgerät und Erweiterungsmodul sich nach Art einer Verzahnung hintergreifende Verriegelungsmittel bilden, mit denen Grundgerät und Erweiterungsmodul jeweils ineinander steckbar sind.

In Fig. 3 ist das Grundgerät mit eigenem Ladeschacht und einheitlichem Gehäuse mit 10˝ bezeichnet und besteht wiederum aus dem einstückigen Gehäuseteil 10a für die Elektronik sowie einem daran vorzugsweise einstückig angebauten Gehäuseteil 10b mit Akkuladeschacht 12′. Es ist lediglich ein zweites Erweiterungsmodul 13′ noch dargestellt mit Ladeschacht 13a′; das Erweiterungsmodul 13′ wird mechanisch formschlüssig mit dem Grundgerät 10˝ verriegelt. Die Verriegelung erfolgt bei dem dargestellten Ausführungsbeispiel durch teilweise oder bis auf eine Seitenfläche vollständig umlaufende, vorspringende Führungsnuten an den zugewandten Wandflächen, die sich so, wie in Fig. 3a gezeigt, jeweils hintergreifen, wodurch Grundgerät mit jeweils seitlich angesetztem Erweiterungsmodul formschlüssig mechanisch verriegelt sind. Beispielsweise kann die Führungsnut 30, 31 beim Grundgerät an der dem Erweiterungsmodul zugewandten Wandung unten fehlen, so daß das Grundgerät von oben auf das Erweiterungsmodul aufgesteckt werden kann. Sobald eine vorgegebene, auch durch Anschläge gesicherte Endposition erreicht ist, ergibt sich an einem gesonderten Kontaktierungsbereich 32, der in der Darstellung der Fig. 3 lediglich an der zugewandten Wandfläche des Grundgeräts 10˝ erkennbar ist, auch die Kontaktgabe, beispielsweise so, wie in Fig. 3b detailliert dargestellt. Kontaktvcrsprünge 33 auf einer Seite berühren Kontaktflächen 34 auf der anderen Seite, beispielsweise auch unter Federdruck.

Falls gewünscht können am Grundgerät noch beliebige Anzeigeleuchten 34 für den jeweiligen Ladezustand oder 35 für eine Temperaturangabe des gerade geladenen Akkus vorgesehen sein.

## Patentansprüche

1. Ladeeinrichtung für Akkus und wiederaufladbare Batterien, insbesondere für die elektrische Stromversorgung von Elektrohandgeräten ohne Netzanschluß, umfassend ein die elektrische Ausrüstung einschließlich Transformator, Gleichrichter und Steuerschaltung enthaltendes Grundgerät (10, 10′, 10˝) und mit dem Grundgerät durch Andocken verbindbare ZusatzAdapterteile in Form von Erweiterungsmodulen (11, 13, 14, 15; 20, 21, 22; 13′) unterschiedlicher oder gleicher Ausführungsform mit jeweils vorgegebenen Akkus angepaßten Ladeschächten (12, 13a, 14a, 15a), wobei durch das Andocken gleichzeitig die für den jeweiligen Ladevorgang benötigten elektrischen Anschlüsse zum Grundgerät (10, 10′, 10˝) hergestellt sind und die jeweiligen Erweiterungsmodule (11, 13, 14, 15; 20, 21, 22; 13′) seitlich an das Grundgerät (10, 10′, 10˝) angesetzt sind und im seitlichen Querschnitt der Form des Grundgeräts entsprechen, wobei ferner durch das seitliche Ansetzen die jeweiligen Erweiterungsmodule zum Grundgerät elektrisch durchkontaktiert werden, dadurch gekennzeichnet, daß ein erweitertes Grundgerät (10, 10′, 10˝) in einem ersten Teilgehäuse (10a) den Elektronikbaustein zum Steuern, Regeln und Überwachen des jeweiligen Ladevorgangs und in einem einstückig angrenzenden Gehäuseteil (10b) eine Akkuladeaufnahme in Form eines Ladeschachts (12) bildet, wobei
zur zeitlich aufeinanderfolgenden Ladung von gleichzeitig eingesetzten unterschiedlichen Akkus der Elektronikbaustein Steuermittel enthält, die direkt oder durch Ansteuerung von Umschaltern in den jeweiligen Erweiterungsmodulen schon geladene Akkus von der weiteren Stromversorgung abschalten und daß zur mechanischen Verriegelung zwischen Grundgerät und jeweiligem Erweiterungsmodul eine mindestens teilweise umlaufende Führungsnut (30, 31) an mindestens einem der miteinander zu verbindenden Teile vorgesehen ist, die beim Aufschieben von Vorsprüngen am jeweils anderen Teil hintergriffen ist, wobei hierdurch gleichzeitig auch die elektrische Kontaktgabe hergestellt wird.

2. Ladeeinrichtung nach Anspruch 1, dadurch gekennzeichnet, daß Erweiterungsmodule (11, 13, 14, 15; 20, 21, 22; 13′) beidseitig des Grundgeräts (10, 10′, 10˝) andockbar sind.

3. Ladeeinrichtung nach Anspruch 1 oder 2, dadurch gekennzeichnet, daß zusätzlich zu den beiden der Ladung eines jeweiligen Akkus dienenden elektrischen Kontaktverbindungen eine Temperatursensor-Kontaktverbindung vorgesehen ist.

4. Ladeeinrichtung nach Anspruch 1, dadurch gekennzeichnet, daß in vertikaler Richtung verlaufende Steckkontakte (27, 28) vorgesehen sind derart, daß zum Andocken von Erweiterungsmodulen (20, 21, 22) unmittelbar aneinandergrenzende Seitenflächen von Grundgerät (10′) und jeweiligem Erweiterungsmodul (20, 21, 22) parallel zueinander bewegt werden bis zur bündigen Anlage.

5. Ladeeinrichtung nach Anspruch 1, dadurch gekennzeichnet, daß die im Grundgerät (10, 10′, 10˝) enthaltene elektrische Ladeschaltung mit den einzelnen Erweiterungsmodulen durch jeweils getrennte Leitungen verbunden ist, wobei diese Leitungen im Falle von zwischengeschalteten Erweiterungsmodulen in diesen durchgeschleift sind.

6. Ladeeinrichtung nach Anspruch 1, dadurch gekennzeichnet, daß an einem der miteinander zu verbindenden Teile (10˝, 13′) auf das andere Teil gerichtete Kontaktvorsprünge (33) vorgesehen sind, die im verriegelten Zustand entsprechende Gegenkontakte am anderen Teil berühren.

7. Ladeeinrichtung nach Anspruch 6, dadurch gekennzeichnet, daß die Kontaktvorsprünge unter Federvorspannung stehen.

8. Ladeeinrichtung nach Anspruch 1, dadurch gekennzeichnet, daß die Ladeschachtöffnung von Grundgerät oder Erweiterungsmodul einen Aufnahmeschacht (19) für einen Ladeschacht-Adaptereinsatz (23, 24, 25) bildet, wobei der Ladeschacht-Adaptereinsatz seinerseits in unterschiedlichen Ausführungsformen Ladeschächte (24a, 25a) für unterschiedliche Akkus bildet.

9. Ladeeinrichtung nach Anspruch 1, dadurch gekennzeichnet, daß der Elektronikbaustein im Grundgerät so ausgebildet ist, daß gleichzeitig in die Ladeschächte von Grundgerät bzw. Erweiterungsmodulen eingesetzte unterschiedliche Akkus zeitlich aufeinanderfolgend geladen werden.

## Claims

1. A charging device for accumulators and rechargeable batteries, in particular for the electrical current supply of electronic hand appliances without a mains connection, comprising a base unit (10, 10′, 10˝) which contains the electrical equipment including a transformer, rectifier and control circuit, and with accessory adapter elements, which can be connected to the base unit by docking and are in the form of extension modules (11, 13, 14, 15; 20, 21, 22; 13′) of different or like construction, in each case with charging shafts (12, 13a, 14a, 15a) matching the respective accumulator, the electrical connections with the base unit (10, 10′, 10˝) which are required for the respective charging procedure being formed simultaneously with the docking and the respective extension modules (11, 13, 14, 15; 20, 21, 22; 13′) being fitted to the side of the base unit (10, 10′, 10˝) and corresponding in their lateral cross section to the shape of the base unit, furthermore the respective extension modules being electrically conductively connected to the base unit by the lateral docking, characterised in that, in a first partial housing (10a), an extended base unit (10, 10′, 10˝) forms the electronic block for controlling and monitoring the respective charging procedure and in an adjoining single-piece housing part (10b) forms an accumulator receptacle in the form of a charging shaft (12), wherein for the successive charging of different simultaneously inserted accumulators the electronic block comprises control means, which disconnect already charged accumulators from further current supply either directly or by actuation or switching in the respective extension modules, and for the mechanical locking between the base unit and the respective extension module an at least partially circumferential guide channel (30, 31) is provided on at least one of the parts which are to be connected, the channel being engaged by projections on the respective other part during docking, simultaneously forming the electrical connection.

2. A charging device according to claim 1,
characterised in that extension modules (11, 13, 14, 15; 20, 21, 22; 13′) can be docked on either side of the base unit (10, 10′, 10˝).

3. A charging device according to claim 1 or 2,
characterised in that a temperature sensor contact connection is provided in addition to the two electrical contact connections used for charging a respective accumulator.

4. A charging device according to claim 1,
characterised in that vertically extending plug contacts (27, 28) are provided in such a manner that, in order to dock extension modules (20, 21, 22), immediately adjoining lateral surfaces of the base unit (10′) and respective extension module (20, 21, 22) are moved parallel to one another until they are flush.

5. A charging device according to claim 1,
characterised in that the electrical charging circuit contained in the base unit (10, 10′, 10˝) is connected to the individual extension modules by separate conductors in each case, the conductors being drawn through the interior of any interconnected extension modules.

6. A charging device according to claim 1,
characterised in that contact projections (33) are provided on one of the parts (10˝, 13′) to be connected, the contact projections (33) pointing towards the other part and contacting corresponding counter contacts on the other part in the locking position.

7. A charging device according to claim 6,
characterised in that the contact projections are loaded under spring pretension.

8. A charging device according to claim 1,
characterised in that the charging shaft opening of the base unit or extension module forms a receiving shaft (19) for a charging shaft adapter insert (23, 24, 25), the charging shaft adapter insert in turn forming charging shafts (24a, 25a) of different construction for different accumulators.

9. A charging device according to claim 1,
characterised in that the electronic block in the base unit is constructed in such a manner that different accumulators simultaneously inserted into the charging shafts of the base unit or extension modules can be charged in succession.

## Revendications

1. Dispositif de charge d'accumulateurs et de batteries rechargeables notamment pour l'alimentation électrique d'appareils électriques portatifs non branchés sur le réseau, comprenant un appareil de base (10, 10′, 10˝) muni de l'équipement électrique à savoir un transformateur, des redresseurs et un circuit de commande, et des pièces adaptatrices complémentaires qui se combinent à l'appareil de base et se présentent sous la forme de modules d'extension (11, 13, 14, 15 ; 20, 21, 22 ; 13′), correspondant à des formes de réalisation différentes ou identiques, et comportant chaque fois des cavités de charge (12, 13a, 14a, 15a) adaptées à chaque accumulateur et en combinant, on établit en même temps les connexions électriques avec l'appareil de base (10, 10′, 10˝), nécessaires pour chaque opération de charge, et les différents modules d'extension (11, 13, 14, 15 ; 20, 21, 22 ; 13′) se montent sur le côté de l'appareil de base (10, 10′, 10˝) et leur section latérale correspond à la forme de l'appareil de base, et en outre la mise en place latérale des différents modules d'extension assurant la liaison électrique jusqu'à l'appareil de base, caractérisé en ce qu'un appareil de base étendu (10, 10′, 10˝) forme dans un premier boîtier partiel (10a) le composant électronique pour commander, réguler et surveiller l'opération de charge respective et dans une partie de boîtier (10b) adjacente, en une seule pièce, un moyen de réception d'accumulateur sous la forme d'une cavité de charge (12), installation dans laquelle, pour charger successivement des accumulateurs différents mis en place simultanément, le composant électronique comporte des moyens de commande qui coupent directement ou en commandant des commutateurs des différents modules d'extension, des accumulateurs déjà chargés pour arrêter l'alimentation électrique et en ce que le verrouillage mécanique entre l'appareil de base et chaque module d'extension est assuré par une rainure de guidage (30, 31) au moins partiellement périphérique sur au moins l'une des pièces à relier et derrière laquelle s'accrochent des saillies de chaque autre pièce lorsqu'on engage par coulissement, pour réaliser en même temps le contact électrique.

2. Installation de charge selon la revendication 1, caractérisée en ce que les modules d'extension (11, 13, 14, 15 ; 20, 21, 22 : 13′) peuvent se combiner sur les deux côtés de l'appareil de base (10, 10′, 10˝).

3. Installation de charge selon la revendication 1 ou 2, caractérisée en ce qu'en plus des deux liaisons de contact, électriques, servant à charger chaque accumulateur, il est prévu une liaison de contact d'un détecteur de température.

4. Installation de charge selon la revendication 1, caractérisée par des contacts d'enfichage (27, 28) dirigés verticalement et pour combiner les modules d'extension (20, 21, 22), les surfaces latérales directement adjacentes de l'appareil de base (10′) et de chaque module d'extension (20, 21, 22) sont déplacées parallèlement l'une par rapport à l'autre pour venir s'accoler.

5. Installation de charge selon la revendication 1, caractérisée en ce que le circuit de charge électrique de l'appareil de base (10, 10′, 10˝) est relié aux différents modules d'extension par des lignes séparées et en cas de modules d'extension intermédiaires, ces lignes sont attachées dans ceux-ci.

6. Installation de charge selon la revendication 1, caractérisée en ce que sur l'une des pièces à relier (10˝, 13′), il y a des contacts en saillie (33) dirigés vers l'autre pièce et qui, à l'état verrouillé, touchent des contacts opposés correspondants de l'autre pièce.

7. Installation de charge selon la revendication 6, caractérisée en ce que les saillies de contact sont précontraintes par ressort.

8. Installation de charge selon la revendication 1, caractérisée en ce que l'ouverture de la cavité de charge de l'appareil de base ou d'un module d'extension forme une cavité de réception (19) pour un insert-adaptateur de cavité de charge (23, 24), 25), cet insert-adaptateur formant lui-même, dans ses différents modes de réalisation, des cavités de charge (24a, 25a) pour différents accumulateurs.

9. Installation de charge selon la revendication 1, caractérisée en ce que le composant électronique de l'appareil de base est réalisé pour charger successivement dans le temps, des accumulateurs différents placés simultanément dans les cavités de charge de l'appareil de base ou des modules d'extension.
